(19) Europäisches Patentamt
European Patent Office
Office européen des brevets

(11) Numéro de publication : **0 189 358 B1**

(12) **FASCICULE DE BREVET EUROPÉEN**

(45) Date de publication du fascicule du brevet : **28.09.88**

(51) Int. Cl.⁴ : **C 07 F 9/40**, A 01 N 57/18

(21) Numéro de dépôt : **86420012.6**

(22) Date de dépôt : **10.01.86**

(54) **Herbicides de type N-(phosphonométhylglycyl) sulfonylamines.**

(30) Priorité : **14.01.85 FR 8500619**

(43) Date de publication de la demande : **30.07.86 Bulletin 86/31**

(45) Mention de la délivrance du brevet : **28.09.88 Bulletin 88/39**

(84) Etats contractants désignés : **AT BE CH DE FR GB IT LI LU NL SE**

(56) Documents cités :
**EP-A- 0 135 454**
**US-A- 3 910 969**

(73) Titulaire : **RHONE-POULENC AGROCHIMIE**
**14-20, rue Pierre Baizet**
**F-69009 Lyon (FR)**

(72) Inventeur : **Borrod, Guy**
**38 bis rue des Granges**
**F-69005 Lyon (FR)**
Inventeur : **Lacroix, Guy**
**332 F Balmont La Duchère**
**F-69009 Lyon (FR)**

(74) Mandataire : **Brachotte, Charles et al**
**RHONE-POULENC AGROCHIMIE 14-20, Rue Pierre Baizet B.P. 9163**
**F-69263 Lyon Cedex 09 (FR)**

**EP 0 189 358 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne de nouveaux herbicides de la famille chimique des N-(phosphonométhylglycyl) sulfonylamines ainsi que des produits intermédiaires pour la préparation de ces herbicides, les procédés de préparation de ces divers produits, et l'application des dits herbicides en agriculture.

On connaît de nombreux produits à groupe aminométhylphosphonique ayant des propriétés herbicides, notamment dans les brevets français 2129327, 2281375, 2251569, 2413398, 2463149, européens 53871, 54382, 73574, américains US 3160632, 3455675, 3868407, 4388103, 4397676, anglais 2090596, mondial WO 83/03608, belges 894244, 894245, 894590, 894591, 894592, 894593, 894594, 894595. La demande antérieure E.P.A. 13454 décrit des composés dont la formule générale englobe sans les faire entrer dans l'état de la technique, les composés objets de la présente invention selon les revendications.

On connaît aussi de nombreux produits intermédiaires dans la préparation de tels produits, notamment dans les brevets européens 81459, 97522, 55695, français 2193830, américains 3835000 et 4422982.

Il est cependant toujours souhaitable d'élargir le domaine des herbicides disponibles, afin de mieux répondre à la totalité des besoins des agriculteurs, ainsi que le domaine des produits intermédiaires permettant d'y accéder afin de disposer de voies nouvelles de synthèse. On connaissait bien certains amides à groupe aminométhylphosphonique, mais ces produits étaient soit peu actifs soit inactifs.

Un but de la présente invention est, par ailleurs, de fournir des herbicides ayant une activité forte et rapide.

Un autre but de la présente invention est de fournir des herbicides à faible rémanence et facilement biodégradables.

Un autre but de la présente invention est de fournir des herbicides de post-émergence, à large spectre d'activité, à systémie descendante, éventuellement sélectifs de certaines cultures.

Un autre but de l'invention est de fournir des herbicides ayant les qualités indiquées ci-avant et ayant en outre une activité de préemergence.

Un autre but de l'invention est de fournir des produits intermédiaires et des procédés permettant l'accès aux herbicides à groupe aminométhylphosphonique.

Un autre but de l'invention est de fournir un procédé très simple et amélioré de préparation d'herbicides et mettant en œuvre des réactifs peu élaborés, notamment la glycine et ses dérivés simples.

D'autres buts et avantages de l'invention apparaîtront au cours de la description qui va suivre.

Il a maintenant été trouvé que ces buts pouvaient être atteints, en tout ou partie, grâce aux composés selon l'invention.

Les composés selon l'invention, utilisables notamment soit comme herbicides soit comme intermédiaires chimiques, sont des produits de formule :

$$O = \underset{OR^3}{\overset{OR^2}{P}} - CH_2 - \overset{R^4}{N} - CH_2 - CO - \underset{R}{N} - SO_2 - R^1 \qquad (I)$$

dans laquelle :

$R^1$ représente un radical alkyle, éventuellement halogéné (de préférence chloré ou fluoré), ayant de 1 à 4 atomes de carbone, de préférence le groupe méthyle,

R représente l'atome d'hydrogène ou un groupe alkyle de 1 à 4 atomes de carbone, de préférence le groupe méthyle,

$R^2$ représente l'atome d'hydrogène ou $R^{21}$,

$R^{21}$ et $R^3$, identiques ou différents, représentent des radicaux phényle, éventuellement substitués par un à trois substituants choisis parmi les atomes d'halogène, les groupes alkyle, haloalkyle, alkoxyle, cyano, alkylthio, phenloxy, phénylthio, alcoxycarbonyle (ces divers groupes alkyle ayant de 1 à 4 atomes de carbone, de préférence 1 à 2),

$R^4$ représente un atome d'hydrogène ou un groupement de formule $Ar(R^5)(R^6)C—$ dans laquelle Ar est un groupe phényle, et $R^5$ et $R^6$ sont l'atome d'hydrogène ou un groupe phényle ou un groupe alkyle ayant, de préférence au plus 6 atomes de carbone,

ainsi que les sels de ces divers produits (notamment les sels du groupe P—OH et ceux de l'atome d'azote porteur de $R^4 \neq H$ qui devient alors un groupe ammonium) et en particulier les sels acceptables en agriculture de ces produits. Les sels acceptables en agriculture incluent les sels de métaux alcalins, notamment de sodium et de potassium, les sels de métaux alcalino-terreux, les sels d'ammonium primaires, secondaires, tertiaires ou quaternaires, les sels de sulfonium. D'autres sels de l'invention sont les sels d'addition avec un acide comme les chlorures, sulfates, phosphates et autres sels dérivés

d'acides ayant un pk inférieur ou égal à 2,5.

Parmi les divers produits selon l'invention, une sous-famille, particulièrement intéressante par l'activité herbicide des produits qui la constituent, comprend les produits de formule (I), dans la formule desquels $R^4$ est l'atome d'hydrogène, et plus spécialement encore les produits dans la formule desquels $R^3$ est le radical phényle éventuellement substitué mais de préférence non substitué.

Par ailleurs, les produits dans lesquels $R^2$ est l'atome d'hydrogène constituent une sous-famille présentant un grand intérêt en raison de son haut niveau d'activité en postémergence tandis que les produits dans lesquels $R^2$ est aryle constituent une sous-famille plus particulièrement intéressante par son activité en préémergence s'ajoutant à l'activité de postémergence.

Dans la formule (I), Ar représente un groupe phényle ; ce radical Ar peut, si la chose est désirée, porter un ou plusieurs substituants qui ne nuisent pas aux réactions intervenant dans le procédé (par exemple des substituants alkyle, alkoxyle, nitro, halogènes et autres, le nombre d'atomes de carbone étant de préférence au plus égal à 6), cependant il n'apparaît pas d'avantage particulier à utiliser de tels substituants.

Comme radicaux $R^4$ on peut citer les radicaux benzyle, 1-phényléthyle, 1-phénylpropyle, naphthylméthyle, 1-naphthyléthyle, 1-naphthylpropyle, diphénylméthyle, trityle (= triphénylméthyle).

Dans le présent exposé les composés chimiques sont désignés par leur nomenclature française mais la numérotation de la position des substituants est placée avant le nom des substituants selon la nomenclature anglosaxonne, et non pas après ce nom selon la nomenclature française.

Les produits de formule (I), dans lesquels $R^2$ est $R^{21}$ (autre que l'atome d'hydrogène), se préparent le plus commodément à partir de produits de formule :

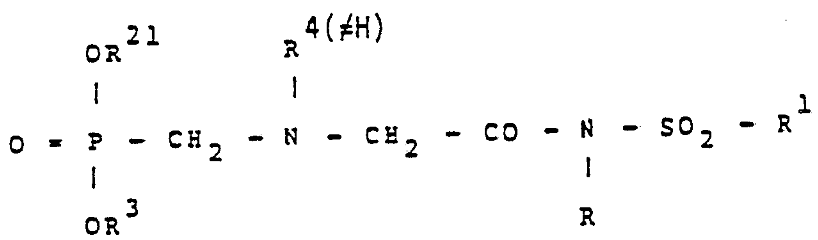

(III)

par hydrogénolyse du groupement $R^4$ (≠ H). C'est le plus couramment une débenzylation. On opère avantageusement en milieu liquide, aqueux ou organique à température ambiante ou supérieure, à pression atmosphérique ou supérieure. Comme catalyseur on peut utiliser les catalyseurs habituels d'hydrogénolyse des radicaux $R^4$ (≠ H) considérés. Comme solvant utilisable pour aider à rendre le milieu liquide on peut citer l'eau, les alcools tels que l'éthanol ou l'isopropanol, les éthers tels que le tétrahydrofuranne, les cétones telles l'acétone ou la méthylisobutylcétone (lorsqu'on utilise Pd comme catalyseur). Comme catalyseurs appropriés on peut citer le palladium, le platine, le nickel Raney. Ce catalyseur peut être utilisé avec ou sans support inerte. On peut aussi utiliser les métaux précités, spécialement le palladium et le platine sous forme de sels, d'hydroxydes, ou d'oxydes, lesquels se transforment en métal correspondant sous l'action de l'hydrogène. Comme catalyseur de débenzylation préféré, on utilise les catalyseurs à base de palladium comme le palladium sur charbon ou le palladium sur sulfate de baryum, ou l'hydroxyde de palladium sur charbon. En fin de réaction, on peut séparer le catalyseur par filtration et évaporer le filtrat on obtient ainsi du produit de formule (I) pratiquement pur.

Un procédé de préparation commode de produits de formule (III) consiste à faire réagir un sulfonamide de formule $R—NH—SO_2—R^1$ avec un anhydride mixte de formule :

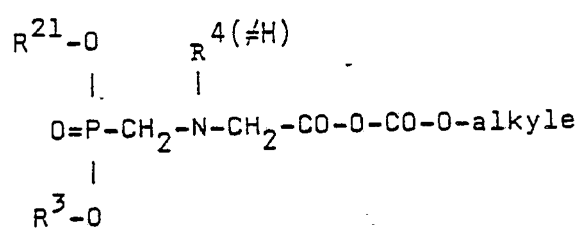

(IV)

lui-même obtenu par réaction d'un produit de formule :

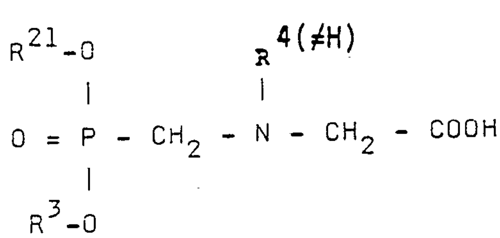

(II)

(de préférence sous forme salifiée) avec un chloroformiate d'alkyle (Cl-CO-O-alkyle ; alkyle a de préférence 1 à 4 atomes de carbone). Le produit de formule (II) est avantageusement utilisé sous forme de sel d'ammonium et spécialement sous forme de sel d'amine tertiaire, telle que la triéthylamine. La réaction s'effectue avantageusement à température comprise entre — 30 et + 10 °C en présence de solvant ; si on utilise un solvant dans lequel les sels formés en cours de réaction sont insolubles, il suffit alors de séparer le produit de réaction par filtration. C'est ainsi qu'on peut utiliser comme solvants des éthers et des esters, notamment le tétrahydrofuranne et l'acétate d'éthyle.

La réaction de l'anhydride mixte de formule (IV) avec le sulfonamide $R^1$—$SO_2$—NH—R s'effectue avantageusement en milieu biphasique eau/solvant organique en présence d'un agent alcalin et d'un catalyseur de transfert de phase. La température est généralement comprise entre 0 et 50 °C. Comme catalyseurs de transfert de phase (utilisé généralement à raison de 0,1 à 10 % en poids par rapport à l'anhydride mixte) on peut citer les sels d'ammonium quaternaire et d'acide fort tels que les halogénures ou sulfates de tétraalkyl ammonium ou trialkyl aralkylammonium. Comme agent alcalin on utilise avantageusement un hydroxyde ou carbonate alcalin ou alcalino-terreux ou d'ammonium, de préférence un hydroxyde alcalin. Comme solvant organique on utilise un solvant organique non miscible à l'eau, par exemple $CH_2Cl_2$.

Les produits de formule (II) se préparent commodément par réaction de phosphite (ou ester phosphonique) de formule

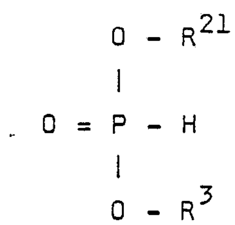

(VI)

($R^{21}$ et $R^3$ ayant même signification que dans la formule (I))
avec du formaldéhyde et un dérivé N-substitué de la glycine, le substituant sur l'atome d'azote étant un substituant hydrogénolysable ; ce dérivé N-substitué de la glycine est en pratique un composé de formule $R^4$ (≠ H)—NH—$CH_2$—CO—OH, $R^4$ ayant même signification que précédemment.

La réaction s'effectue généralement entre 0 et 100 °C, de préférence entre 20 et 90 °C par simple mélange de réactifs. Bien qu'un large excès (3/1 à 1/3 en rapports molaires) de l'un des réactifs par rapport à un autre soit possible, il est plus avantageux en pratique de se rapprocher le plus possible de la stœchiométrie et de ne pas s'écarter de plus de 20 % en mole de cette stœchiométrie.

Le formaldéhyde est utilisé sous l'une ou l'autre forme commodément accessible. Selon une modalité la plus courante il est utilisé sous forme de solution aqueuse.

La réaction peut être effectuée en présence d'un solvant inerte mais généralement il n'est pas utile d'utiliser un solvant autre que l'eau, celle-ci étant présente en quantité généralement comprise entre 20 et 90 %, de préférence entre 30 et 65 %.

Le produit de réaction est isolé par tout moyen connu en soi.

Les produits de formule (I) dans lesquels $R^2$ est l'atome d'hydrogène, c'est-à-dire les produits de formule :

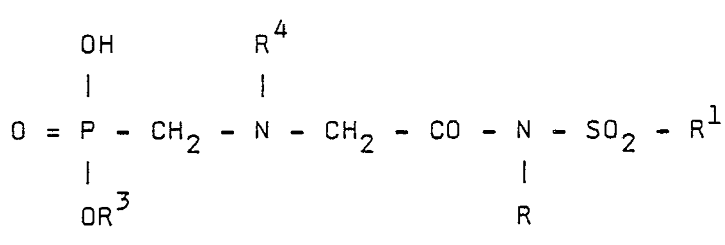

(VII)

se préparent avantageusement par hydrolyse des produits de formule :

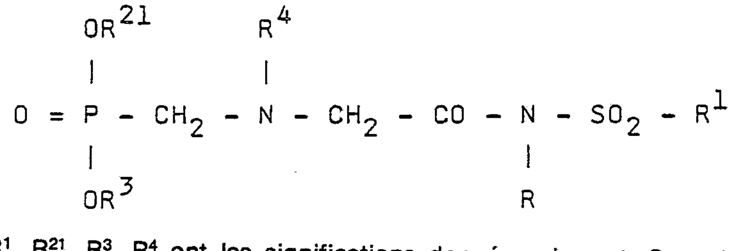

(VIII)

dans lesquelles R, $R^1$, $R^{21}$, $R^3$, $R^4$ ont les significations données ci-avant. Cette hydrolyse s'effectue avantageusement par simple chauffage en milieu acide, de préférence aqueux (ou partiellement aqueux

tel que les milieux hydroalcooliques ou eau/cétones), du produit de formule (VIII) ; on détermine généralement le temps de réaction convenable pour remplacer $R^{21}$ par H par quelques mesures préalables du degré d'avancement de la réaction dans les conditions considérées et à des temps différents. Le milieu acide d'hydrolyse est obtenu commodément à l'aide d'acides forts minéraux ou organiques tels que les acides chlorhydrique, sulfurique, phosphorique, perchlorique, trichloroacétique.

Les exemples suivants, donnés à titre non limitatif illustrent l'invention et montrent comment elle peut être mise en œuvre.

Les exemples 1 à 4 illustrent la synthèse et les propriétés physiques de composés herbicides et intermédiaires chimiques selon l'invention.

L'exemple 5 illustre l'application en postlevée de produits selon l'invention (les termes postlevée et postémergence sont synonymes). L'exemple 6 illustre l'application en prélevée de produit selon l'invention (les termes prélevée et préémergence sont synonymes).

Dans le présent exposé, les pourcentages représentent des pourcentages pondéraux, sauf pour les rendements et sauf indication contraire.

En utilisant les procédés des exemples 1 à 4, ou des procédés semblables mais en modifiant les réactifs, on a obtenu les divers composés n° 1 à 48 de formule générale (I), dont la formule particulière est précisée dans le tableau (II) et les caractéristiques physiques sont indiquées au tableau (III). Dans ce tableau (III) les points de fusion indiqués peuvent correspondre à un phénomène de fusion s'accompagnant de décomposition ; lorsqu'on a mis le signe (v), la température indiquée est un point de vitrification et non pas de fusion.

Les tableaux (IV) et (V) donnent des résultats biologiques obtenus avec les composés des tableaux (II) et (III) dans les conditions des exemples 5 et 6.

## Exemple 1

Dans un réacteur de 100 ml, on mélange 50 ml d'acide chlorhydrique aqueux 0,5 N et 2,26 g de composé n° 2 :

On chauffe 15 mn à l'ébullition à reflux puis évapore à sec. On recristallise à l'aide d'un mélange acétone/oxyde de propylène en proportions volumiques respectives 50/5. Le précipité est filtré, lavé à l'acétone, séché. On obtient 1,4 g de composé n° 1 sous forme de poudre blanche.

Rendement : 76 %.

## Exemple 2

Dans un réacteur de 250 ml, on mélange

50 ml de tétrahydrofuranne (THF)

5 g de composé n° 3

1,7 g de catalyseur comprenant 50 % d'eau et 5 % de palladium déposé sur du charbon actif.

On agite 40 mn sous atmosphère d'hydrogène et à température ambiante. On filtre, évapore, et recristallise dans l'isopropanol. On obtient 3,2 g de composé n° 2 sous forme de poudre blanche. Rendement : 77,7 %.

Le réactif de départ (composé n° 3) avait été préparé de la manière suivante :

Dans un réacteur de 250 ml on mélange

33 g de composé n° 4 de formule :

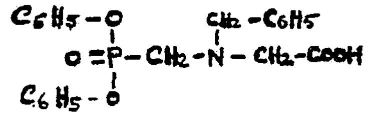

70 ml de THF

8,1 g de triéthylamine.

On verse, goutte à goutte à — 10 °C, 8,7 g de chloroformiate d'éthyle et maintient l'agitation encore 1 h 30 mn. On élimine le précipité de chlorhydrate de triéthylamine par filtration. On évapore à sec sous vide à 30 °C. On obtient 39,4 g d'huile rougeâtre (anhydride mixte).

Cette huile est mélangée avec 70 ml de $CH_2Cl_2$, 9,6 g de méthane sulfonamide de formule $CH_3—NH—SO_2—CH_3$, 0,4 g de chlorure de triéthylbenzylammonium. A 10 °C, on verse goutte à goutte sous agitation, 6,8 g de solution aqueuse de soude (0,085 mole de NaOH) et maintient l'agitation 2 h 30 mn. On ajoute 50 ml d'eau, décante, lave la phase organique à l'eau puis la sèche et l'évapore. Après recristallisation dans l'isopropanol on obtient 19 g de composé n° 3 sous forme de poudre blanche. Rendement : 47,3 %.

## Exemple 3

Le réactif de départ (composé n° 4) de l'exemple 2 a été préparé de la manière suivante :

On mélange 39 g de N-benzylglycine, 80 ml d'eau, 20,3 ml de solution aqueuse de formaldéhyde

(0,248 mole). On verse goutte à goutte à température ambiante 58 g (0,248 mole) de diphénylphosphite $(C_6H_5O)_2$ PH(O). Au bout de 30 mn on laisse la température s'élever à 30 °C et on agite encore une heure. On filtre, lave à l'eau, sèche. Après recristallisation dans un mélange éther d'isopropyle/isopropanol en proportions volumiques 10/1, on obtient 57,4 g de composé n° 4 sous forme de poudre blanche fondant à 91 °C. Rendement : 59,1 %.

Exemple 4

A un mélange de 9 g de composé n° 28 dans 80 ml d'acétone on ajoute 6 ml d'acide chlorhydrique aqueux 3N. On chauffe 2 h à l'ébullition à reflux. On refroidit, ajoute 5 ml d'oxyde de propylène. On filtre le précipité, on le lave à l'acétone, sèche. On obtient ainsi 3 g (rendement 43 %) de composé n° 16.

Exemple 5

Application herbicide, en postlevée des espèces végétales

Dans des pots de 9 × 9 × 9 cm remplis de terre agricole légère, on sème un nombre de graines déterminé en fonction de l'espèce végétale et de la grosseur de la graine.

On recouvre ensuite les graines d'une couche de terre d'environ 3 mm d'épaisseur et on laisse germer la graine jusqu'à ce qu'elle donne naissance à une plantule au stade convenable. Le stade de traitement pour les graminées est le stade « deuxième feuille en formation ». Le stade de traitement pour les dicotylédones, est le stade « cotylédons étalés, première feuille vraie en développement ».

Les pots sont alors traités par pulvérisation de bouillie en quantité correspondant à une dose volumique d'application de 500 l/ha et contenant la matière active à la concentration désirée.

La bouillie utilisée pour le traitement est une suspension ou solution aqueuse de la matière active contenant 0,1 % en poids de Cémulsol NP 10 (agent tensio-actif constitué d'alkylphénol polyéthoxylé, notamment de nonylphénolpolyéthoxylé) et 0,04 % en poids de tween 20 (agent tensio-actif constitué d'un oléate de dérivé polyoxyéthylène du sorbitol).

Selon la concentration en matière active de la bouillie, la matière active a été appliquée aux doses de 1 et 4 kg/ha.

Les pots traités sont ensuite placés dans des bacs destinés à recevoir l'eau d'arrosage, en subirrigation, et maintenus pendant 28 jours à température ambiante sous 70 % d'humidité relative.

Au bout de 28 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active. On détermine ainsi le pourcentage de destruction des plantes traitées par rapport au témoin non traité. Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin.

Les plantes utilisées dans les tests sont :

Tableau (I)

| Abréviations | Nom français | Nom latin |
|---|---|---|
| AVF | folle-avoine | Avena fatua |
| ECH | panisse | Echinochloa crus-galli |
| LOL | ray-grass | Lolium multiflorum |
| PHS | haricot | Phaseolus vulgaris |
| SIN | moutarde | Sinapis alba |
| CHE | chenopode | Chenopodium album |
| CYP | souchet | Cyperus esculentus |

Tableau (I) (suite)

| Abréviations | Nom français | Nom latin |
|---|---|---|
| IPO | ipomée | Ipomea purpurea |
| CEN | bleuet | Centaurea cyanus |
| ABU | abutilon | Abutilon theophrasti |
| DAU | carotte sauvage | Daucus carota |

Les résultats obtenus sont présentés au tableau (IV) :

Exemple 6

Application herbicide, en prélevée des espèces végétales

Dans des pots de 9 × 9 × 9 cm remplis de terre agricole légère, on sème un nombre de graines déterminé en fonction de l'espèce végétale et de la grosseur de la graine.

Les pots sont traités par pulvérisation de bouillie en quantité correspondant à une dose volumique d'application de 500 l/ha et contenant la matière active à la concentration désirée.

Le traitement avec la bouillie est donc effectué sur des graines non recouvertes de terre (on utilise le terme de bouillie pour désigner, en général, les compositions diluées à l'eau, telles qu'on les applique sur les végétaux).

La bouillie utilisée pour le traitement est préparée comme à l'exemple 5.

La dose de matière active appliquée a été de 4 kg/ha.

Après traitement, on recouvre les graines d'une couche de terre d'environ 3 mm d'épaisseur.

Les pots sont alors placés dans des bacs destinés à recevoir l'eau d'arrosage, en subirrigation, et maintenus pendant 28 jours à température ambiante sous 70 % d'humidité relative.

Au bout de 28 jours, on observe les effets herbicides qui sont appréciés de la même manière qu'à l'exemple 5. Les résultats obtenus dans cet exemple 6 sont présentés au tableau (V).

Les essais réalisés montrent donc les propriétés remarquablement avantageuses des composés selon l'invention, en tant qu'herbicides à large spectre d'activité et actifs en postémergence (spécialement pour les composés de formule (I) dans lesquels $R^2$ est l'atome d'hydrogène) et également en préémergence (spécialement pour les composés de formule (I) dans laquelle $R^2$ ($R^{21}$) est aryle).

Pour leur emploi pratique, les composés selon l'invention sont rarement utilisés seuls. Le plus souvent ces composés font partie de compositions. Ces compositions, utilisables comme agents herbicides, contiennent comme matière active un composé selon l'invention tel que décrit précédemment en association avec les supports solides ou liquides, acceptables en agriculture et les agents tensio-actifs également acceptables en agriculture. En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides, fongicides ou herbicides) ou à propriétés régulatrices de la croissance des plantes. Plus généralement les composés utilisés dans l'invention peuvent être associés à tous les additifs solides ou liquides correspondant aux techniques habituelles de la mise en formulation.

Les doses d'emploi des composés utilisés dans l'invention peuvent varier dans de larges limites, notamment selon la nature des mauvaises herbes à éliminer et le degré d'infestation habituel des cultures pour ces mauvaises herbes.

D'une façon générale, les compositions selon l'invention contiennent habituellement de 0,05 à 95 % environ (en poids) d'une ou plusieurs matières actives selon l'invention, de 1 % à 95 % environ de un ou plusieurs supports solides ou liquides et éventuellement de 0,1 à 50 % environ de un ou plusieurs agents tensioactifs.

Selon ce qui a déjà été dit les composés utilisés dans l'invention sont généralement associés à des supports et éventuellement des agents tensioactifs.

Par le terme « support », dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau ; alcools, notamment le butanol ; esters, notamment l'acétate de méthyl-glycol ; cétones, notamment la cyclohexanone et l'isophorone ; fractions de pétrole ; hydrocarbures aromatiques, notamment les xylènes, ou paraffiniques ; hydrocarbures chlorés aliphatiques, notamment le trichloroéthane, ou aromatiques, notamment les chlorobenzènes ; des solvants hydrosolubles tels que le diméthylformamide, le diméthylsulfoxyde, la N-méthyl-pyrrolidone ; gaz liquéfiés, etc...).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La présence d'au moins un agent tensioactif est généralement indispensable lorsque la matière active et/ou le support inerte ne sont pas solubles dans l'eau et que l'agent vecteur de l'application est l'eau.

Pour leur application, les composés de formule (I) se trouvent donc généralement sous forme de compositions ; ces compositions selon l'invention sont elles-mêmes sous des formes assez diverses, solides ou liquides.

Comme formes de compositions solides, on peut citer les poudres pour poudrage (à teneur en composé de formule (I) pouvant aller jusqu'à 100 %) et les granulés, notamment ceux obtenus par extrusion, par compactage, par imprégnation d'un support granulé, par granulation à partir d'une poudre (la teneur en composé de formule (I) dans ces granulés étant entre 0,5 et 80 % pour ces derniers cas).

Comme formes de compositions liquides ou destinées à constituer des compositions liquides lors de l'application, on peut citer les solutions, en particulier les concentrés émulsionnables, les émulsions, les suspensions concentrées, les aérosols, les poudres mouillables (ou poudre à pulvériser), les granulés autodispersibles et les pâtes.

Les concentrés émulsionnables ou solubles comprennent également le plus souvent 10 à 80 % de matière active, les émulsions ou solutions prêtes à l'application contenant, quant à elles, 0,01 à 20 % de matière active. En plus du solvant, les concentrés émulsionnables peuvent contenir, quand c'est nécessaire, 2 à 20 % d'additifs appropriés, comme des stabilisants, des agents tensioactifs, des agents de pénétration, des inhibiteurs de corrosion, des colorants, des adhésifs.

A partir de ces concentrés, on peut obtenir par dilution avec de l'eau des émulsions de toute concentration désirée, qui conviennent particulièrement à l'application sur les végétaux.

A titre d'exemple, voici la composition de quelques concentrés émulsionnables :

Exemple 7

| | |
|---|---|
| matière active | 250 g |
| alkylphénol polyéthoxylé | 30 g |
| alkylarylsulfonate de calcium | 50 g |
| coupe de distillation du pétrole, distillant entre 160 et 185 °C | 670 g |

Exemple 8

| | |
|---|---|
| matière active | 350 g |
| huile de ricin polyéthoxylée | 60 g |
| alkylarylsulfonate de sodium | 40 g |
| cyclohexanone | 150 g |
| xylène | 400 g |

Exemple 9

| | |
|---|---|
| matière active | 400 g |
| alkyl phénol polyéthoxylé | 100 g |
| éther méthylique de l'éthylène glycol | 250 g |
| coupe pétrolière aromatique distillant entre 160-185 °C | 250 g |

Exemple 10

| | |
|---|---|
| matière active | 400 g |

| | |
|---|---|
| phosphate de tristyrylphénol polyéthoxylé | 50 g |
| phosphate d'alkylphénol polyéthoxylé | 65 g |
| alkyl benzène sulfonate de sodium | 35 g |
| cyclohexanone | 300 g |
| coupe pétrolière aromatique distillant entre 160-185 °C | 150 g |

Exemple 11

| | |
|---|---|
| matière active | 400 g/l |
| dodécylbenzène sulfonate alcalin | 24 g/l |
| monylphénol oxyéthylé à 10 molécules d'oxyde d'éthylène | 16 g/l |
| cyclohexanone | 200 g/l |
| solvant aromatique | q.s.p. 1 litre. |

Exemple 12

| | |
|---|---|
| matière active | 250 g |
| huile végétale époxydée | 25 g |
| mélange de sulfonate d'alcoylaryle et d'éther de polyglycol et d'alcools gras | 100 g |
| diméthylformamide | 50 g |
| xylène | 575 g |

Les suspensions concentrées, qui sont applicables en pulvérisation, sont préparées de manière à obtenir un produit fluide stable ne se déposant pas (broyage fin) et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu soluble ou non soluble : certaines matières solides organiques ou des sels minéraux peuvent être dissous dans le support pour aider à empêcher la sédimentation ou comme antigels pour l'eau.

A titre d'exemple, voici une composition de suspension concentrée (Exemple 13)

| | |
|---|---|
| matière active | 500 g |
| phosphate de tristyrylphénol polyéthoxylé | 50 g |
| alkylphénol polyéthoxylé | 50 g |
| polycarboxylate de sodium | 20 g |
| éthylène glycol | 50 g |
| huile organopolysiloxanique (antimousse) | 1 g |
| polysaccharide | 1,5 g |
| eau | 316,5 g |

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quant c'est nécessaire, de 0 à 10 % d'un ou plusieurs stabilisants et/ou autres additifs, comme des agents de pénétration, des adhésifs, ou des agents antimottants, colorants, etc...

A titre d'exemple, voici diverses compositions de poudres mouillables (Exemple 14)

| | |
|---|---|
| matière active | 50 % |
| lignosulfonate de calcium (défloculant) | 5 % |
| isopropylnaphtalène sulfonate (agent mouillant anionique) | 1 % |
| silice antimottante | 5 % |
| kaolin (charge) | 39 % |

Exemple 15

| | |
|---|---|
| matière active | 80 % |
| alkylnaphtalène sulfonate de sodium | 2 % |
| lignosulfonate de sodium | 2 % |
| silice antimottante | 3 % |
| kaolin | 13 % |

Exemple 16

| | |
|---|---|
| matière active | 50 % |

| | |
|---|---|
| alkylnaphtalène sulfonate de sodium | 2 % |
| méthyl cellulose de faible viscosité | 2 % |
| terre de diatomées | 46 % |

Exemple 17

| | |
|---|---|
| matière active | 90 % |
| dioctylsulfosuccinate de sodium | 0,2 % |
| silice synthétique | 9,8 % |

Exemple 18

| | |
|---|---|
| matière active | 400 g |
| lignosulfonate de sodium | 50 g |
| dibutylnaphtalène sulfonate de sodium | 10 g |
| silice | 540 g |

Exemple 19

| | |
|---|---|
| matière active | 250 g |
| isooctylphénoxy-polyoxyéthylène-éthanol | 25 g |
| mélange équipondéral de craie de Champagne et d'hydroxyéthylcellulose | 17 g |
| aluminosilicate de sodium | 543 g |
| kieselguhr | 165 g |

Exemple 20

| | |
|---|---|
| matière active | 100 g |
| mélange de sels de sodium de sulfates d'acides gras saturés | 30 g |
| produit de condensation d'acide naphtalène sulfonique et de formaldéhyde | 50 g |
| kaolin | 820 g |

Pour obtenir ces poudres à pulvériser ou poudres mouillables, on mélange intimement les matières actives dans des mélangeurs appropriés avec les substances additionnelles ou on imprègne la matière active fondue sur la charge poreuse et on broie avec des moulins ou autres broyeurs appropriés. On obtient par là des poudres à pulvériser dont la mouillabilité et la mise en suspension sont avantageuses ; on peut les mettre en suspension avec de l'eau à toute concentration désirée et cette suspension est utilisable très avantageusement en particulier pour l'application sur les feuilles de végétaux.

Les granulés « autodispersibles » (en langue anglaise « dry flowable » ; il s'agit plus exactement de granulés facilement dispersibles dans l'eau) ont une composition sensiblement voisine de celle des poudres mouillables. Ils peuvent être préparés par granulation de formulations décrites pour les poudres mouillables, soit par voie humide (mise en contact de la matière active finement divisée avec la charge inerte et avec un peu d'eau, par exemple 1 à 20 %, ou de solution aqueuse de dispersant ou de liant, puis séchage et tamisage), soit par voie sèche (compactage puis broyage et tamisage).

A titre d'exemple, voici une formulation de granulé autodispersible (Exemple 21)

| | |
|---|---|
| matière active | 800 g |
| alkylnaphtalène sulfonate de sodium | 20 g |
| méthylène bis naphtalène sulfonate de sodium | 80 g |
| kaolin | 100 g |

A la place des poudres mouillables, on peut réaliser des pâtes. Les conditions et modalités de réalisation et d'utilisation de ces pâtes sont semblables à celles des poudres mouillables ou poudres à pulvériser.

Comme cela a déjà été dit, les dispersions et émulsions aqueuses, par exemple des compositions obtenues en diluant à l'aide d'eau une poudre mouillable ou un concentré émulsionnable selon l'invention, sont comprises dans le cadre général des compositions utilisables dans la présente invention. Les émulsions peuvent être du type eau-dans-l'huile ou huile-dans-l'eau et elles peuvent avoir une consistance épaisse comme celle d'une « mayonnaise ».

Toutes ces dispersions ou émulsions aqueuses ou bouillies sont applicables aux cultures à désherber par tout moyen convenable, principalement par pulvérisation, à des doses qui sont généralement de l'ordre de 100 à 1 200 litres de bouillie à l'hectare.

Les granulés destinés à être disposés sur le sol sont habituellement préparés de manière qu'ils aient des dimensions comprises entre 0,1 et 2 mm et ils peuvent être fabriqués par agglomération ou imprégnation. De préférence, les granulés contiennent 1 à 25 % de matière active et 0 à 10 % d'additifs

comme des stabilisants, des agents de modification à libération lente, des liants et des solvants.

Selon un exemple de composition de granulé, on utilise les constituants suivants (Exemple 22)

| | |
|---|---|
| matière active | 50 g |
| propylène glycol | 25 g |
| huile de lin bouillie | 50 g |
| argile (granulométrie : 0,3 à 0,8 mm) | 910 g |

La présente invention concerne aussi un procédé de désherbage qui consiste à appliquer aux plantes devant être détruites une quantité efficace d'un composé de formule (I).

Les produits et compositions selon l'invention s'appliquent commodément sur la végétation et notamment sur les mauvaises herbes à éliminer lorsque celles-ci présentent un feuillage vert. Leur rémanence étant faible on peut opérer de manière à ce que la culture soit semée avant ou après traitement mais émerge peu après traitement (2 à 3 semaines) c'est-à-dire après la dégradation des produits de l'invention.

Pour les composés adaptés à cette application, on peut aussi utiliser un procédé de désherbage qui consiste à appliquer une quantité efficace d'un composé de formule (I) sur des zones ou terrains où l'on veut empêcher la pousse ou le développement de plantes n'ayant pas encore poussé (application de préémergence).

La dose d'application de matière active est généralement comprise entre 0,1 et 10 kg/ha, de préférence entre 0,5 et 8 kg/ha (généralement 100 à 1 200 litres de bouillie à l'hectare).

Les divers additifs ou adjuvants mentionnés plus haut ont généralement comme rôle principal de faciliter la manipulation et l'épandage des produits selon l'invention. Dans certains cas, ils peuvent aussi avoir un rôle de pénétration de la matière active dans la plante et, par là, ils peuvent augmenter l'activité normale des matières actives selon l'invention.

Les compositions herbicides et leur application peuvent aussi être mises en œuvre peu avant la récolte de manière à tuer les mauvaises herbes dont les racines subsistent dans le sol après la récolte. On peut ainsi semer très rapidement après la récolte sans qu'il soit nécessaire d'effectuer des opérations mécaniques de désherbage (labourage ou autre).

(Voir Tableaux pages suivantes)

Tableau (II)

| R | $R^1$ | $R^2=R^3=X-C_6H_4-$ X et position de X sur $C_6H_4$ | $R^4=H$ composé n° | $R^4=$ benzyle composé n° | $R^3 =$ $X-C_6H_4-$; $R^4 = H$ $R^2 = H$ composé n° |
|---|---|---|---|---|---|
| $CH_3$ | $CH_3$ | $2-CH_3$ | 26 | 35 | 12 |
| $CH_3$ | $CH_3$ | $3-CH_3$ | 27 | 36 | 15 |
| $CH_3$ | $CH_3$ | $4-CH_3$ | 28 | 37 | 16 |
| $CH_3$ | $CH_3$ | $4-CH_3O$ | 29 | 38 | 17 |
| $CH_3$ | $CH_3$ | 4-t-Bu | 30 | 39 | 18 |
| $CH_3$ | $CH_3$ | $2-CH_3O$ | | 40 | 13 |
| $CH_3$ | $CH_3$ | 2-Cl | | | 14 |
| $C_2H_5$ | $CH_3$ | H | 19 | 41 | 5 |
| $n-C_3H_7$ | $CH_3$ | H | 20 | 42 | 6 |
| cyclo-propyl | $CH_3$ | H | 21 | | 7 |

Tableau (II) (suite)

| R | $R^1$ | $R^2=R^3=X-C_6H_4-$ X et position de X sur $C_6H_4$ | $R^4=H$ composé n° | $R^4=$ benzyle composé n° | $R^3 = X-C_6H_4-$; $R^4 = H$ $R^2 = H$ composé n° |
|---|---|---|---|---|---|
| $CH_3$ | $CH_3CHCl$ | H | 25 | 43 | 11 |
| $CH_3$ | $(CH_3)_2CH$ | H | 22 | 44 | 8 |
| $CH_3$ | $C_3H_7$ | H | 23 | 45 | 9 |
| $CH_3$ | $Cl-CH_2$ | H | 24 | 46 | 10 |
| $CH_3$ | $CH_3$ | H | 2 | 3 | 1 |
| $CH_3$ | $(CH_3)_2CH$ | $4-CH_3$ | 33 | 47 | 31 |
| $C_2H_5$ | $(CH_3)_2CH$ | H | 34 | 48 | 32 |

Tableau (III)

| Composé n° | Point de fusion en °C | Indice de réfraction $n^{20}_D$ | Caractéristiques de spectres RMN. Déplacements delta (d) en ppm ou constantes de couplage (J) en hertz |
|---|---|---|---|
| 1 | 165 | | |
| 2 | 95 | | |
| 3 | 121 | | |
| 4 | 91 | | |
| 5 | 195 | | |
| 6 | 201 | | |
| 7 | 210 | | |
| 8 | 187 | | |
| 9 | 190 | | |
| 10 | 178 | | |
| 11 | 131 | | |
| 12 | 115(v) | | |

Tableau (III) (1° suite)

| Composé n° | Point de fusion en °C | Indice de réfraction $n^{20}_D$ | Caractéristiques de spectres RMN. Déplacements delta (d) en ppm ou constantes de couplage (J) en hertz |
|---|---|---|---|
| 13 | 185 | | |
| 14 | 147 | | |
| 15 | 115(v) | | |
| 16 | 196 | | |
| 17 | 202 | | |
| 18 | 156-159 | | |
| 19 | 83 | | |
| 20 | 64 | | |
| 21 | 93 | | |
| 22 | 83 | | |
| 23 | | 1,545 | |
| 24 | 89 | | |

Tableau (III) (2° suite)

| Composé n° | Point de fusion en °C | Indice de réfraction $n^{20}_D$ | Caractéristiques de spectres RMN. Déplacements delta (d) en ppm ou constantes de couplage (J) en hertz |
|---|---|---|---|
| 25 | | 1,556 | |
| 26 | | 1,5495 | |
| 27 | | 1,549 | |
| 28 | | 1,548 | |
| 29 | 81 | | |
| 30 | | 1,526 | |
| 31 | 196 | | |
| 32 | 95(v) | | |
| 33 | | 1,546 | |
| 34 | | 1,543 | |
| 35 | | 1,5565 | |
| 36 | | 1,5605 | |
| 37 | | 1,556 | |

Tableau (III) (3° suite)

| Composé n° | Point de fusion en °C | Indice de réfraction $n_D^{20}$ | Caractéristiques de spectres RMN. Déplacements delta (d) en ppm ou constantes de couplage (J) en hertz |
|---|---|---|---|
| 38 | 90 | | |
| 39 | | 1,522 | |
| 40 | | 1,555 | |
| 41 | | | d = 3,6 , (J = 8,8); 3,96 ; 4,10 |
| 42 | | | d = 3,58 , (J = 9,2); 3,92 ; 4,10 |
| 43 | | | d = 3,59 , (J = 9,2); 3,94 ; 4,08 |
| 44 | | | d = 3,60 , (J = 9,2); 3,94 ; 4,06 |
| 45 | | 1,526 | d = 3,62 , (J = 8,8); 3,92 ; 4,08 |
| 46 | | | d = 3,58 , (J = 9,2); 3,96 ; 4,08 |
| 47 | | 1,545 | |
| 48 | | | d = 3,70 , (J = 9,2); 3,91 ; 4,10 |

Tableau (IV)

Activité en post émergence (en %)

| Composé | Dose en kg/ha | AVF | ECH | LOL | CYP | CEN | IPO |
|---|---|---|---|---|---|---|---|
| 1 | 4 | 80 | 95 | 100 | 100 | 100 | 100 |
| 1 | 1 | 30 | 95 | 90 | 100 | 100 | 95 |
| 1 | 0,25 | 30 | 95 | 50 | 20 | 50 | 50 |
| 5 | 4 | 40 | 100 | 100 | 100 | 100 | 100 |
| 5 | 1 | 30 | 100 | 100 | 0 | 100 | 80 |
| 6 | 4 | 30 | 100 | 100 | 20 | 100 | 100 |
| 6 | 1 | 30 | 100 | 80 | 20 | 50 | 50 |
| 7 | 1 | 20 | 100 | 80 | 0 | 100 | 20 |
| 8 | 1 | 0 | 95 | 60 | 0 | 100 | 0 |
| 9 | 1 | 0 | 95 | 40 | 0 | 100 | 30 |
| 10 | 1 | 20 | 100 | 40 | 30 | 100 | 90 |
| 11 | 4 | 40 | 100 | 100 | 90 | 100 | 60 |
| 11 | 1 | 20 | 100 | 90 | 90 | 100 | 50 |
| 12 | 4 | 50 | 100 | 100 | 95 | 100 | 100 |

Tableau (IV) (1° suite)

Activité en post émergence (en %)

| Composé | Dose en kg/ha | AVF | ECH | LOL | CYP | CEN | IPO |
|---|---|---|---|---|---|---|---|
| 13 | 4 | 80 | 100 | 100 | 60 | 100 | 95 |
| 13 | 1 | 40 | 100 | 100 | 20 | 100 | 50 |
| 14 | 4 | 80 | 100 | 100 | 40 | 100 | 95 |
| 14 | 1 | 30 | 100 | 95 | 50 | 100 | 40 |
| 15 | 4 | 20 | 100 | 100 | 20 | 100 | 50 |
| 16 | 4 | 20 | 100 | 95 | 80 | 100 | 50 |
| 16 | 1 | 20 | 100 | 80 | 20 | 100 | 80 |
| 17 | 4 | 95 | 100 | 100 | 60 | 100 | 100 |
| 17 | 0,25 | 40 | 100 | 90 | 20 | 100 | 30 |
| 18 | 4 | 50 | 100 | 95 | 50 | 100 | 50 |
| 18 | 1 | 40 | 100 | 98 | 30 | 100 | 30 |
| 2 | 4 | - | 98 | 80 | - | 100 | 90 |
| 2 | 1 | - | 98 | 70 | - | 100 | 50 |
| 19 | 4 | 20 | 100 | 95 | 20 | 100 | 30 |
| 20 | 4 | 20 | 100 | 80 | 0 | 100 | 100 |
| 21 | 4 | 30 | 100 | 90 | 20 | 100 | 30 |

Tableau (IV) (2° suite)

Activité en post émergence (en %)

| Composé | Dose en kg/ha | AVF | ECH | LOL | CYP | CEN | IPO |
|---|---|---|---|---|---|---|---|
| 22 | 4 | 40 | 100 | 80 | 20 | 100 | 90 |
| 23 | 4 | 90 | 100 | 98 | 50 | 100 | 100 |
| 23 | 1 | 40 | 100 | 90 | 20 | 100 | 100 |
| 24 | 4 | 80 | 100 | 100 | 20 | 100 | 100 |
| 25 | 1 | 30 | 98 | 95 | 40 | 100 | 40 |
| 25 | 4 | 30 | 100 | 100 | 40 | 100 | 100 |
| 26 | 4 | 80 | 98 | 90 | 0 | 100 | 0 |
| 27 | 4 | 80 | 100 | 100 | 30 | 100 | 80 |
| 27 | 1 | 20 | 40 | 80 | 20 | 100 | 20 |
| 28 | 4 | 80 | 98 | 80 | 20 | 100 | 98 |
| 29 | 4 | 50 | 95 | 95 | 30 | 100 | 40 |
| 30 | 4 | 90 | 100 | 95 | 20 | 100 | 100 |

Tableau (IV) (3° suite)

Activité en post-émergence (en %)

| Composé | Dose en kg/ha | SIN | ABU | DAU | PHS | CHE |
|---|---|---|---|---|---|---|
| 1 | 4 | 100 | 100 | 100 | 100 | 98 |
| 1 | 1 | 100 | 95 | 100 | 100 | 95 |
| 1 | 0,25 | 80 | 30 | 80 | 100 | |
| 5 | 4 | 100 | 100 | 100 | 100 | |
| 5 | 1 | 100 | 40 | 100 | 100 | |
| 6 | 4 | 100 | 95 | 100 | 100 | |
| 6 | 1 | 100 | 30 | 50 | 100 | |
| 7 | 1 | 100 | 0 | 30 | 100 | |
| 8 | 1 | 100 | 20 | 80 | 100 | |
| 9 | 1 | 90 | 30 | 100 | 80 | |
| 10 | 1 | 100 | 20 | 60 | 100 | |
| 11 | 4 | 100 | 90 | 95 | 100 | |
| 11 | 1 | 100 | 30 | 90 | 100 | |
| 12 | 4 | 100 | 100 | 100 | 100 | |

Tableau (IV) (4° suite)

Activité en post-émergence (en %)

| Composé | Dose en kg/ha | SIN | ABU | DAU | PHS | CHE |
|---|---|---|---|---|---|---|
| 13 | 4 | 100 | 100 | 100 | 100 | |
| 13 | 1 | 100 | 30 | 95 | 100 | |
| 14 | 4 | 100 | 100 | 100 | 100 | |
| 14 | 1 | 100 | 80 | 80 | 100 | |
| 15 | 4 | 100 | 98 | 98 | 100 | |
| 16 | 4 | 100 | 95 | 98 | 100 | |
| 16 | 1 | 95 | 40 | 30 | 100 | |
| 17 | 4 | 100 | 100 | 100 | 100 | |
| 17 | 0,25 | 80 | 20 | 95 | 100 | |
| 18 | 4 | 100 | 40 | 100 | 0 | |
| 18 | 1 | 98 | 30 | 95 | 0 | |
| 2 | 4 | 98 | 90 | 100 | 100 | 100 |
| 2 | 1 | 80 | 30 | 80 | 100 | 98 |
| 19 | 4 | 95 | - | 98 | 100 | |

Tableau (IV) (5° suite)

Activité en post-émergence (en %)

| Composé | Dose en kg/ha | SIN | ABU | DAU | PHS | CHE |
|---|---|---|---|---|---|---|
| 20 | 4 | 80 | 30 | 80 | 100 | |
| 21 | 4 | 98 | 40 | 80 | 100 | |
| 22 | 4 | 90 | 30 | 80 | 100 | |
| 23 | 4 | 100 | 95 | 95 | 100 | |
| 23 | 1 | 100 | 80 | 90 | 100 | |
| 24 | 4 | 100 | 80 | 80 | 100 | |
| 25 | 1 | 100 | 20 | 40 | 100 | |
| 25 | 4 | 100 | 80 | 100 | 100 | |
| 26 | 4 | 100 | 30 | 80 | 0 | |
| 27 | 4 | 100 | 100 | 100 | 0 | |
| 27 | 1 | 100 | 20 | 100 | 0 | |
| 28 | 4 | 100 | 95 | 100 | 100 | |
| 29 | 4 | 80 | 20 | 100 | 30 | |
| 30 | 4 | 100 | 80 | 95 | 50 | |

Tableau (V)

Activité en pré-émergence (en %)

| Composé | Dose en kg/ha | ECH | LOL | CEN | IPO | SIN | ABU | PHS |
|---|---|---|---|---|---|---|---|---|
| 2 | 4 | 20 | 98 | - | - | 98 | - | 100 |
| 19 | 4 | 30 | 98 | 50 | - | 90 | 50 | 70 |
| 25 | 4 | 20 | 20 | 100 | - | 90 | 98 | 50 |

**Revendications**

1. Composés caractérisés en ce qu'ils ont pour formule :

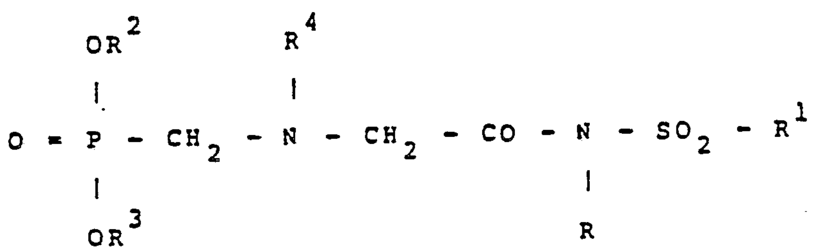

(I)

dans laquelle :

$R^1$ représente un radical alkyle, éventuellement halogéné, ayant de 1 à 4 atomes de carbone,

R représente l'atome d'hydrogène ou un radical alkyle de 1 à 4 atomes de carbone,

$R^2$ représente l'atome d'hydrogène ou $R^{21}$,

$R^3$, $R^{21}$, identiques ou différents, représentent des radicaux phényle, éventuellement substitués par un à trois substituants tels que les atomes d'halogènes, $C_1$-$C_4$ alkyle, $C_1$-$C_4$ haloalkyle, $C_1$-$C_4$ alkoxyle, cyano, $C_1$-$C_4$ alkylthio, phénoxy, phénylthio ($C_1$-$C_4$ alcoxy) carbonyle,

$R^4$ représente un atome d'hydrogène ou un groupe $ArR^5R^6C$— dans laquelle Ar est un groupe phényle et $R^5$, $R^6$ sont l'atome d'hydrogène ou un groupe phényle ou $C_1$-$C_6$ alkyle

ainsi que les sels acceptables en agriculture de ces composés.

2. Composés selon la revendication 1, caractérisés en ce que les substituants alkyle, haloalkyle, alkoxyle, alkylthio, alcoxycarbonyle mentionnés pour $R^3$ et $R^{21}$ sont des substituants $C_1$-$C_2$ alkyle, $C_1$-$C_2$ haloalkyle, $C_1$-$C_2$ alkoxyle, $C_1$-$C_2$ alkylthio ($C_1$-$C_2$ alcoxy), carbonyle.

3. Composés selon l'une des revendications 1 ou 2, caractérisés en ce que R est un radical alkyle.

4. Composés selon l'une des revendications 1 à 3, caractérisés en ce que R et $R^1$ sont le radical méthyle.

5. Composés selon l'une des revendications 1 à 4, caractérisés en ce que $R^4$ est l'atome d'hydrogène, $R^3$ est le radical phényle et $R^2$ est H ou phényle.

6. Procédé de préparation de composés de formule

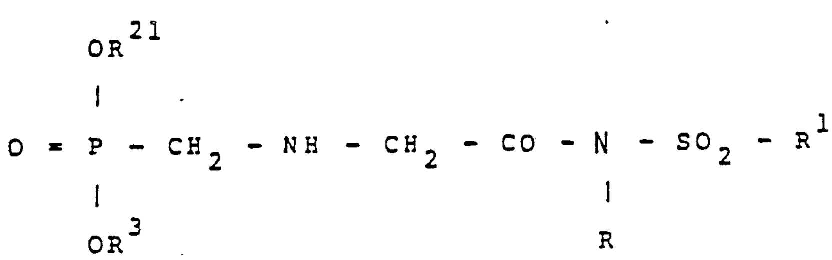

dans laquelle R, $R^1$, $R^3$ et $R^{21}$ ont les significations indiquées dans l'une ou l'autre des revendications 1 à 5, caractérisé en ce qu'on hydrogénolyse un composé de formule

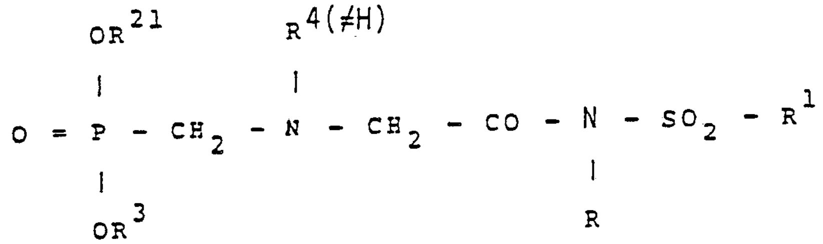

$R^4$ ayant l'une des significations indiquées dans l'une ou l'autre des revendications 1 à 5.

7. Procédé de préparation de composés herbicides de formule

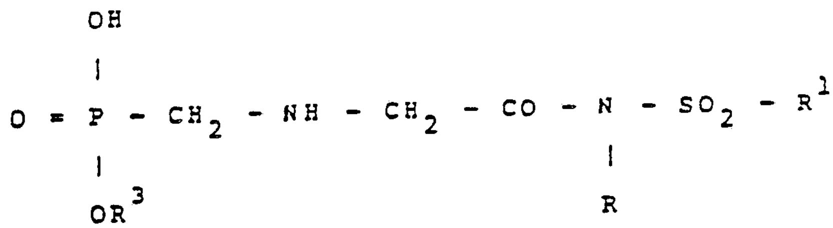

caractérisé en ce qu'on effectue une hydrogénolyse selon la revendication 6 puis qu'on hydrolyse (puis éventuellement salifie) le composé obtenu, les divers radicaux R, $R^1$, $R^3$ ayant les significations données dans l'une ou l'autre des revendications 1 à 5.

8. Procédé de préparation de composés de formule

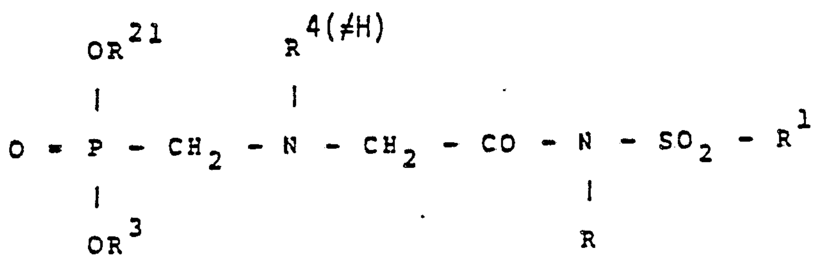

dans lesquels R, $R^1$, $R^{21}$, $R^3$, $R^4$ ont les significations indiquées dans l'une ou l'autre des revendications 1 à 5, caractérisé en ce qu'on fait réagir un sulfonamide de formule

$R—NH—SO_2—R^1$ avec un anhydride mixte de formule

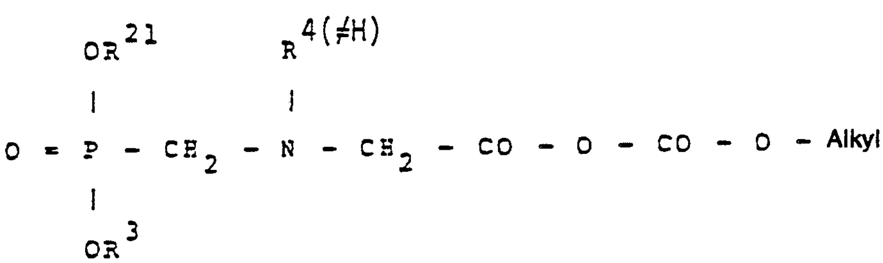

9. Procédé selon la revendication 8, caractérisé en ce que la réaction s'effectue en milieu biphasique eau/solvant organique en présence d'un agent alcalin et d'un sel d'ammonium quaternaire.

10. Compositions herbicides, caractérisées en ce qu'elles contiennent 0,05 à 95 % en poids d'un composé selon l'une des revendications 1 à 5, et au moins un support inerte, usuel, acceptable en agriculture.

11. Compositions selon la revendication 10, caractérisées en ce qu'elles contiennent 5 à 50 % d'agent tensioactif.

12. Procédé pour le désherbage, caractérisé en ce qu'on applique au contact des feuilles des végétaux à supprimer une dose efficace d'un composé selon l'une des revendications 1 à 5 ou d'une composition selon l'une des revendications 10 ou 11.

13. Procédé selon la revendication 12, caractérisé en ce qu'on applique une composition selon l'une des revendications 10 à 11, la matière active étant appliquée à raison de 0,1 à 10 kg/ha, de préférence de 0,5 à 8 kg/ha.

**Claims**

1. A compound of the formula :

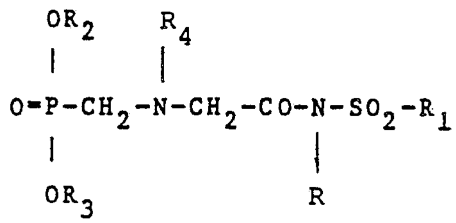

(I)

wherein :

$R_1$ represents an optionnally halogenated alkyl radical containing from 1 to 4 carbon atoms ;

R represents the hydrogen atom or an alkyl group containing from 1 to 4 carbon atoms ;

$R_2$ represents the hydrogen atom or a group $R^{21}$ ;

$R_3$, $R_{21}$ which may be the same or different represent a phenyl radical optionnally substituted by one the three radicals selected from halogen, $C_1$-$C_4$ alkyl, $C_1$-$C_4$ haloalkyl, cyano, $C_1$-$C_4$ alkylthio, phenoxy, phenylthio ($C_1$-$C_4$) alkoxycarbonyl ;

$R_4$ represents a hydrogen atom or a —$ArR_5R_6C$— group wherein Ar is a phenyl group and $R_5$, $R_6$ each represent a hydrogen atom, a phenyl group or $C_1$-$C_6$ alkyl group,

or an agriculturally acceptable salt thereof.

2. Compounds according to claim 1 wherein the substituants alkyl, haloalkyl, alcoxyl, alkylthio, alcoxycarbonyl mentionned for $R_3$ and $R_{21}$ are substituents $C_1$-$C_2$ alkyl, $C_1$-$C_2$ haloalkyl, $C_1$-$C_2$ alkylthio ($C_1$-$C_2$ alcoxy) carbonyl.

3. A compound according to claims 1 or 2, wherein R is an alkyl group.

4. A compound according to claims 1 to 3, wherein R and $R_1$ each represent the methyl radical.

5. A compound according to any one of the preceding claims wherein $R_4$ is hydrogen and $R_3$ is phenyl radical and $R_2$ is hydrogen or phenyle.

6. A process for the preparation of a compound of formula :

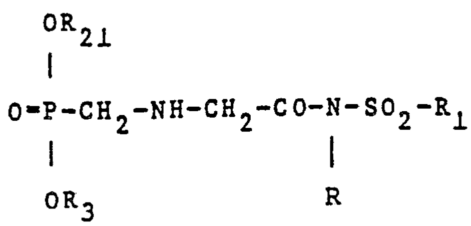

wherein R, $R_1$, $R_3$ and $R_{21}$ are as defined in claims 1 to 5, which comprises the hydrogenolysis of a compound of formula :

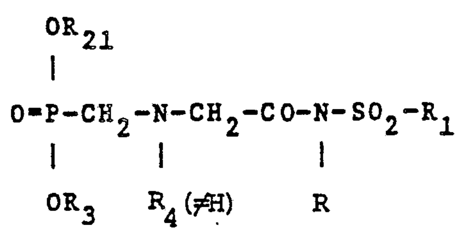

$R_4$ being as defined in anyone of claims 1 to 5.

7. A process for the preparation of an herbicidal compound of formula

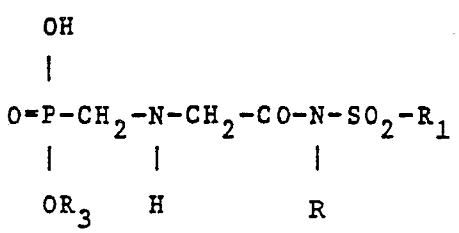

wherein the various symbols are as defined in anyone of claims 1 to 5, which comprises the hydrogenolysis according to claim 6 then followed by an hydrolysis (then optionnally salifying) the resulting compound.

8. A process for the preparation of compounds of formula :

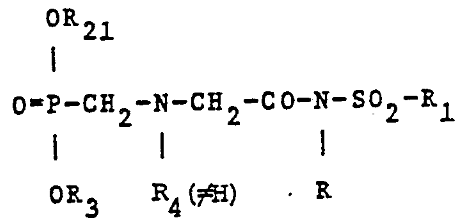

wherein R, $R_1$, $R_{21}$, $R_3$, $R_4$ are as defined in anyone of claims 1 to 5, which comprises the reaction of a sulphonamide of formula R—NH—$SO_2$—$R_1$ wherein R and $R_1$ are as defined in claim 1, with a mixed anhydride of formula :

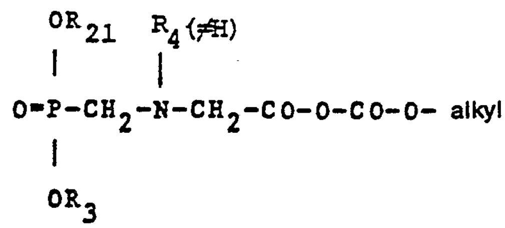

9. A process according to claim 8, in which the reaction is carried out in a water/organic solvent two-phase medium in the presence of an alkaline agent and a quaternary ammonium salt.

10. A herbicidal composition, which comprise 0,05 to 95 % by weight of a compound according to anyone of claims 1 to 5 in association with at least an usual, inert, agriculturally acceptable, carrier.

11. A composition according to claim 10, which comprises 5 to 50 % of a surface-active agent.

12. A method of destruction of weeds which comprises applying to the leaves of the weeds to be destroyed an effective amount of a compound according to any one of the claims 1 to 5 or a composition according to the claims 10 to 11.

13. A method according to claim 12, in which a composition according to claims 10, 11, the active ingredient being applied in an amount of 0-1 to 10 kg/ha, preferently 0,5 to 8 kg/ha.

**Patentansprüche**

1. Verbindungen, dadurch gekennzeichnet, daß sie als Formel haben :

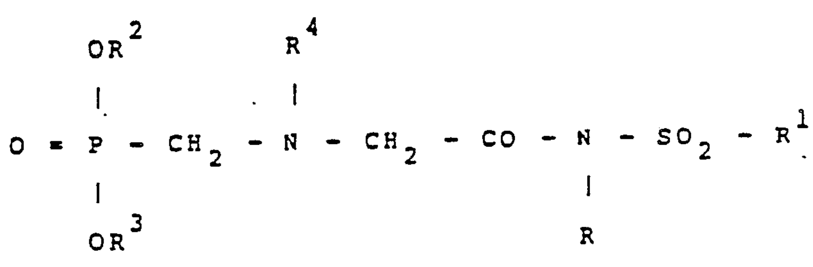

worin

$R^1$ einen gegebenenfalls halogenierten Alkylrest mit 1 bis 4 Kohlenstoffatomen bedeutet,

R das Wasserstoffatom oder eine Alkylgruppe mit 1 bis 4 Kohlenwasserstoffatomen bedeutet,

$R^2$ das Wasserstoffatom oder $R^{21}$ bedeutet,

$R^3$, $R^{21}$, die identisch oder verschieden sind, Phenylreste bedeuten, die gegebenenfalls durch 1 bis 3 Substituenten substituiert sind wie Halogenatome, $C_1$-$C_4$-Alkyl, $C_1$-$C_4$-Haloalkyl, $C_1$-$C_4$-Alkoxyl, Cyano, $C_1$-$C_4$-Alkylthio, Phenoxy, Phenylthio ($C_1$-$C_4$-Alkoxy)-Carbonyl,

$R^4$ ein Wasserstoffatom oder eine Gruppe $ArR^5R^6C$— bedeutet, worin Ar eine Phenylgruppe ist und $R^5$, $R^6$ sind Wasserstoffatome oder eine Phenylgruppe oder $C_1$-$C_6$-Alkyl,

sowie die in der Landwirtschaft annehmbaren Salze dieser Verbindungen.

2. Verbindungen gemäß Anspruch 1, dadurch gekennzeichnet, daß die Substituenten Alkyl, Haloalkyl, Alkoxyl, Alkylthio, Alkoxycarbonyl, die für $R^3$ und $R^{21}$ angegeben sind, Substituenten $C_1$-$C_2$-Alkyl, $C_1$-$C_2$-Haloalkyl, $C_1$-$C_2$-Alkoxyl, $C_1$-$C_2$-Alkylthio ($C_1$-$C_2$-Alkoxy)-Carbonyl sind.

3. Verbindungen gemäß einem der Ansprüche 1 oder 2, dadurch gekennzeichnet, daß R ein Alkylrest ist.

4. Verbindungen gemäß einem der Ansprüche 1 bis 3, dadurch gekennzeichnet, daß R und $R^1$ den Methylrest bedeuten.

5. Verbindungen gemäß einem der Ansprüche 1 bis 4, dadurch gekennzeichnet, daß $R^4$ das Wasserstoffatom ist, $R^3$ der Phenylrest ist und $R^2$ ist H oder Phenyl.

6. Verfahren zur Herstellung von Verbindungen der Formel

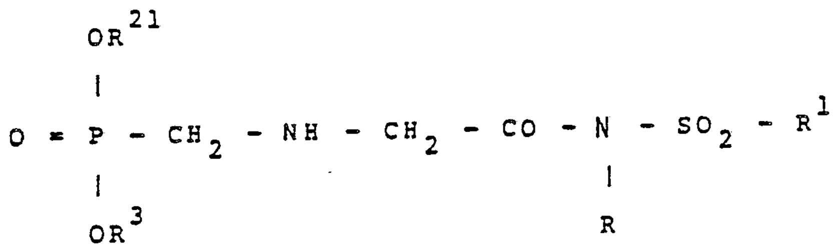

worin R, $R^1$, $R^3$ und $R^{21}$ die in einem der Ansprüche 1 bis 5 angegebenen Bedeutungen haben, dadurch gekennzeichnet, daß man eine Verbindung der Formel

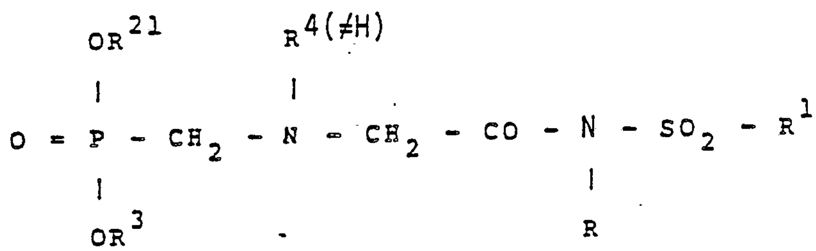

worin $R^4$ eine der in den Ansprüchen 1 bis 5, angegebenen Bedeutungen hat, der Hydrogenolyse unterwirft.

7. Verfahren zur Herstellung von herbiciden Verbindungen der Formel

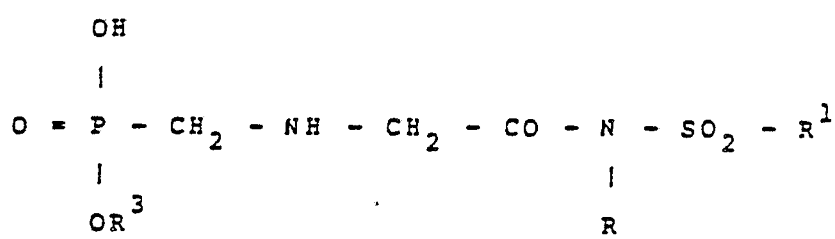

dadurch gekennzeichnet, daß man eine Hydrogenolyse gemäß Anspruch 6 durchführt, und daß man dann die erhaltene Verbindung hydrolysiert (und dann gegebenenfalls in das Salz überführt), wobei die verschiedenen Reste R, $R^1$ und $R^3$ die in den Ansprüchen 1 bis 5 angegebenen Bedeutungen haben.

8. Verfahren zur Herstellung von Verbindungen der Formel

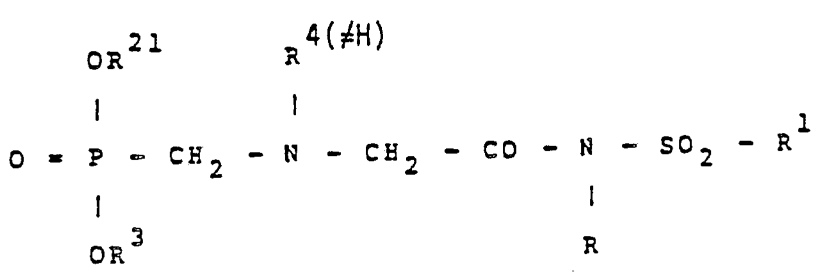

worin R, $R^1$, $R^{21}$, $R^3$ und $R^4$ die in den Ansprüchen 1 bis 5 angegebenen Bedeutungen haben, dadurch gekennzeichnet, daß man ein Sulfonamid der Formel $R—NH—SO_2—R^1$ mit einem gemischten Anhydrid der Formel

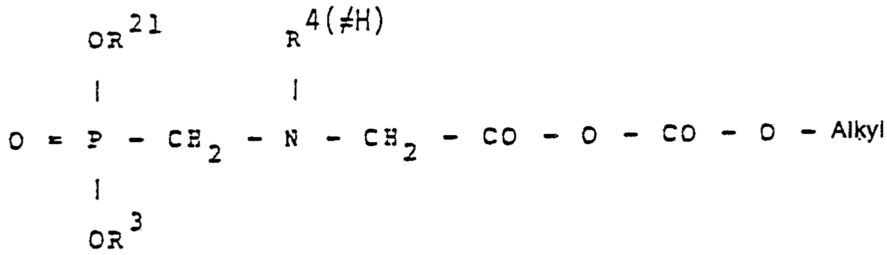

zur Reaktion bringt.

9. Verfahren gemäß Anspruch 8, dadurch gekennzeichnet, daß die Reaktion in zweiphasigen Milieu Wasser/organisches Lösungsmittel in Anwesenheit eines alkalischen Mittels und eines quaternären Ammoniumsalzes durchgeführt wird.

10. Herbicide Zusammensetzungen, dadurch gekennzeichnet, daß sie 0,05 bis 95 Gew.-% einer Verbindung gemäß einem der Ansprüche 1 bis 5 und wenigstens einen inerten, üblichen, in der Landwirtschaft annehmbaren Träger enthalten.

11. Zusammensetzungen gemäß Anspruch 10, dadurch gekennzeichnet, daß sie 5 bis 50 % oberflächenaktives Mittel enthalten.

12. Verfahren zur Unkrautvernichtung oder -bekämpfung, dadurch gekennzeichnet, daß man die Blätter der zu vernichtenden Pflanzen mit einer wirksamen Dosis einer Verbindung gemäß einem der Ansprüche 1 bis 5 oder einer Zusammensetzung gemäß einem der Ansprüche 10 oder 11 in Kontakt bringt.

13. Verfahren gemäß Anspruch 12, dadurch gekennzeichnet, daß man eine Zusammensetzung gemäß einem der Ansprüche 10 bis 11 aufbringt, wobei das aktive Material in einer Menge von 0,1 bis 10 kg/ha, vorzugsweise 0,5 bis 8 kg/ha, aufgebracht wird.